# FASCICULE DE BREVET EUROPEEN

(11) **EP 1 980 385 B1**
(45) Date de publication et mention de la délivrance du brevet: **21.10.2015**
(21) Numéro de dépôt: 08103406.8
(22) Date de dépôt: 07.04.2008
(51) Int. Cl.: B29C 49/58, B29C 49/56, B29C 49/12, B29C 49/36, B29C 49/06

(54) **Dispositif de moulage, par soufflage ou étirage-soufflage, de récipients en matière thermoplastique**
Vorrichtung zum Formen durch Blasen oder Streckblasen von Behältern aus thermoplastischem Material
Device for moulding thermoplastic containers by blowing or stretch-blowing

(30) Priorité: 10.04.2007 FR 0702597
(43) Date de publication de la demande: 15.10.2008
(73) Titulaire: Sidel Participations, 76930 Octeville Sur Mer (FR)
(72) Inventeur: Rousseau, Nicolas c/o SIDEL PARTICIPATIONS, 76930 Octeville-sur-Mer (FR); Danel, Laurent c/o SIDEL PARTICIPATIONS, 76930 Octeville-sur-Mer (FR); Lemble, Thierry c/o SIDEL PARTICIPATIONS, 76930 Octeville-sur-Mer (FR)
(74) Mandataire: Cabinet Plasseraud

(56) Documents cités:
- FR-A- 2 662 631
- FR-A- 2 848 905
- FR-A- 2 871 721
- FR-A- 2 876 942

## Description

La présente invention concerne de façon générale le domaine du moulage de récipients, notamment des bouteilles ou analogues, en matière thermoplastique tel que le PET par soufflage ou étirage-soufflage de préformes chaudes, et elle concerne plus précisément des perfectionnements apportés aux dispositifs de moulage de récipients en matière thermoplastique par soufflage ou étirage-soufflage de préformes chaudes, ces dispositifs comportant un moule et des moyens de soufflage comprenant une tuyère de soufflage du type tuyère-cloche déplaçable axialement et des moyens d'entraînement pour déplacer ladite tuyère de soufflage au-dessus dudit moule entre une position relevée dans laquelle l'extrémité de la tuyère est élevée au-dessus du moule et une position de soufflage dans laquelle l'extrémité de la tuyère est en appui étanche contre le moule, lesquels moyens d'entraînement comprennent des moyens d'entraînement mécaniques incluant au moins un galet suiveur solidaire de la tuyère et au moins une came de commande respective contre laquelle ledit galet suiveur est maintenu en appui, le galet suiveur et la came étant en mouvement relatif.

Le document FR 2 871 721 A décrit un dispositif de moulage de récipients thermoplastiques qui est équipé d'une tuyère de soufflage à entraînement mécanique comme exposé ci-dessus.

Les dispositifs de moulage agencés comme indiqué ci-dessus sont couramment commercialisés par la Demanderesse et ont donné toute satisfaction dans les conditions d'exploitation pratiquées jusqu'à présent. Toutefois, ces dispositifs présentent plusieurs inconvénients.

Un premier inconvénient concerne la conception mécanique des moyens d'entraînement de la tuyère de soufflage, avec galet suiveur et came en déplacement relatif. Le phénomène de rebondissement du galet suiveur lors de son entrée en contact avec la came engendre des vibrations qui se propagent au sein du dispositif. Ce phénomène de rebondissement a pu être maîtrisé par le choix de structures appropriées, notamment des moyens de rappel, de sorte qu'un tel agencement a pu donner satisfaction jusqu'aux vitesses de production élevées (par exemple de l'ordre de 50 000 à 60 000 récipients/heure) auxquelles on est parvenu aujourd'hui. Mais, pour parvenir à des vitesses de production encore plus élevées (par exemple jusqu'à 80 000 récipients/heure) que les exploitants souhaitent maintenant atteindre, ces aménagements structuraux ne peuvent plus être retenus, notamment pour ce qui concerne les ressorts de rappel des galets suiveurs.

Par ailleurs, des moyens d'entraînement fluidiques, typiquement pneumatiques, peuvent certes être mis en oeuvre pour assurer le déplacement de la tuyère de soufflage au moins dans un sens (typiquement la descente de la tuyère). Toutefois, de tels moyens d'entraînement pneumatiques sont grands consommateurs de gaz (en pratique de l'air) sous pression, notamment du fait du rejet dans l'atmosphère, en fin d'étape, du gaz qui a travaillé. Or la production d'air sous pression constitue un poste particulièrement onéreux dans les installations concernées ; notamment, plus la quantité et/ou la pression d'air sous pression est grande, et plus le compresseur doit être puissant, alors que les compresseurs puissants sont très coûteux à l'achat et sont grands consommateurs d'énergie électrique en fonctionnement.

Au surplus, dans le cas où la tuyère est du type tuyère-cloche, le fond de la cloche de la tuyère est soumis à la haute pression (typiquement de l'ordre de 40x10⁵ Pa, pour fixer les idées) du gaz de soufflage. L'effort qui en résulte, qui est dirigé vers le haut, tend à décoller la tuyère du moule contre lequel elle doit être maintenue en appui étanche, ce qui peut engendrer des dysfonctionnements, notamment des défauts d'étanchéité de l'appui et des fuites du gaz de soufflage, lors de l'étape de soufflage. Pour éviter un tel inconvénient, il est nécessaire de prévoir des moyens appropriés pour que la cloche soit fermement maintenue en appui étanche sur le moule malgré cette réaction défavorable, et les agencements appropriés se révèlent, là encore, coûteux.

Le document FR 2 848 905 A divulgue un dispositif de moulage de récipients thermoplastiques qui est équipé d'une tuyère de soufflage à entraînement pneumatique. Dans cet agencement connu, les deux faces supérieure et inférieure du piston solidaire de la tuyère ont des aires respectives sensiblement identiques ; de plus, les deux orifices respectivement supérieur (pour la descente de la tuyère) et inférieur (pour la montée de la tuyère) sont raccordés sélectivement à la source de fluide sous pression pour l'obtention du sens de déplacement souhaité pour la tuyère.

L'invention a précisément pour objet de remédier à ces inconvénients constatés par la pratique et de proposer une solution technique perfectionnée qui permette à elle seule de remédier simultanément aux deux inconvénients précités malgré leur indépendance technique.

A ces fins, l'invention propose un dispositif de moulage de récipients en matière thermoplastique par soufflage ou étirage-soufflage de préformes chaudes tel qu'exposé au préambule, lequel dispositif, étant agencé conformément à l'invention, se caractérise en ce que les moyens d'entraînement comprennent en outre des moyens d'entraînement pneumatiques qui incluent :
- une enceinte fixe entourant sensiblement coaxialement un tronçon terminal supérieur de la tuyère de soufflage,
- un piston enfermé dans ladite enceinte et solidaire de l'extrémité supérieure de la tuyère de soufflage, ledit piston définissant dans l'enceinte une chambre supérieure et une chambre inférieure, le piston possédant une face supérieure ayant une surface supérieure à la surface de la cloche de la tuyère et une face inférieure ayant une surface inférieure à celle de sa face supérieure,
- un orifice supérieur prévu dans l'enceinte et en communication avec la chambre supérieure,
- un orifice inférieur prévu dans l'enceinte et en communication avec la chambre inférieure,
- les deux orifices supérieur et inférieur étant raccordés à une source de fluide de commande sous pression,
- un circuit de dérivation établi entre les deux chambres supérieure et inférieure, et
- des moyens sélecteurs propres à isoler et raccorder à l'atmosphère l'orifice inférieur pendant la phase de soufflage,
- la surface de la face supérieure du piston étant telle que l'effort exercé sur le piston par le fluide de commande dans la chambre supérieure soit supérieur à l'effort en sens inverse exercé par le fluide de soufflage sur la cloche de la tuyère.

Grâce à la mise en oeuvre des moyens proposés par l'invention, ce sont les moyens d'entraînement mécaniques, avec le galet suiveur en appui sur la came, qui déterminent la vitesse de déplacement de la tuyère, tandis qu'on confère à des moyens d'entraînement pneumatiques la fonction d'assurer le maintien du galet suiveur en appui sur la came durant le déplacement de la tuyère et le verrouillage de la tuyère en appui sur le moule durant la phase de soufflage. Le recours à des moyens pneumatiques permet d'engendrer l'effort de rappel élevé nécessaire au guidage correct, sans rebonds, du galet suiveur et évite la mise en oeuvre de ressorts de grande raideur dont la manipulation, notamment lors du montage et du démontage, peut s'avérer dangereuse pour le personnel de maintenance.

Egalement grâce à la mise en oeuvre des moyens proposés par l'invention, il devient aisément possible de faire en sorte que le fluide sous pression commandant le fonctionnement des moyens d'entraînement pneumatiques ne soit pas systématiquement rejeté à l'atmosphère en fin de chaque cycle de soufflage et de réduire notablement les volumes morts, rendant ainsi possibles des économies substantielles en fluide de soufflage sous pression.

Dans un mode de réalisation simple, on peut prévoir que les deux orifices supérieur et inférieur sont raccordés à la source de fluide de soufflage elle-même et que la face supérieure du piston possède une dimension transversale qui est supérieure à la dimension transversale de la cloche de la tuyère. Le fait que le vérin pneumatique soit mû par le fluide sous pression de soufflage permet, d'une part, de simplifier le câblage pneumatique des moyens de soufflage et, d'autre part, de pouvoir donner au vérin une dimension transversale minimale puisqu'il est soumis à la même pression que celle s'appliquant sur la cloche de la tuyère. Toutefois, il n'en demeure pas moins que c'est du fluide sous pression de soufflage, dont la production est coûteuse, qui est employé.

Pour éviter cet inconvénient, on peut de façon alternative prévoir que les deux orifices supérieur et inférieur soient raccordés à une source de fluide de commande à une pression inférieure à la pression du fluide de soufflage, notamment de préférence à une source de fluide sous pression industrielle (typiquement de l'ordre de 7x10⁵ Pa) qui est présente dans toutes les installations pneumatiques.

Bien que qu'il ne s'agisse pas là de la seule solution possible, on peut avantageusement prévoir que le circuit en dérivation soit extérieur à l'enceinte et incorpore une électrovanne qui est placée en position de fermeture pendant la phase de soufflage. De façon préférée, on peut aussi prévoir que le circuit en dérivation soit intérieur à l'enceinte, notamment s'étende entre l'enceinte et le piston, et qu'un circuit incorporant une électrovanne soit interposé entre la source de fluide de commande et l'orifice inférieur.

Comme cela peut aisément se comprendre d'après le contexte, les dispositions conformes à l'invention peuvent très avantageusement trouver une application dans les installations du type carrousel tournant pour la fabrication de récipients en matière thermoplastique par soufflage ou étirage-soufflage de préformes chaudes, comportant une pluralité de dispositifs de moulage répartis périmétriquement sur le carrousel, dans lesquelles chaque dispositif de moulage est agencé comme exposé ci-dessus, avec une came montée de façon fixe et coopérant avec les galets suiveurs d'entraînement des tuyères de soufflage des dispositifs de soufflage embarqués sur le carrousel tournant.

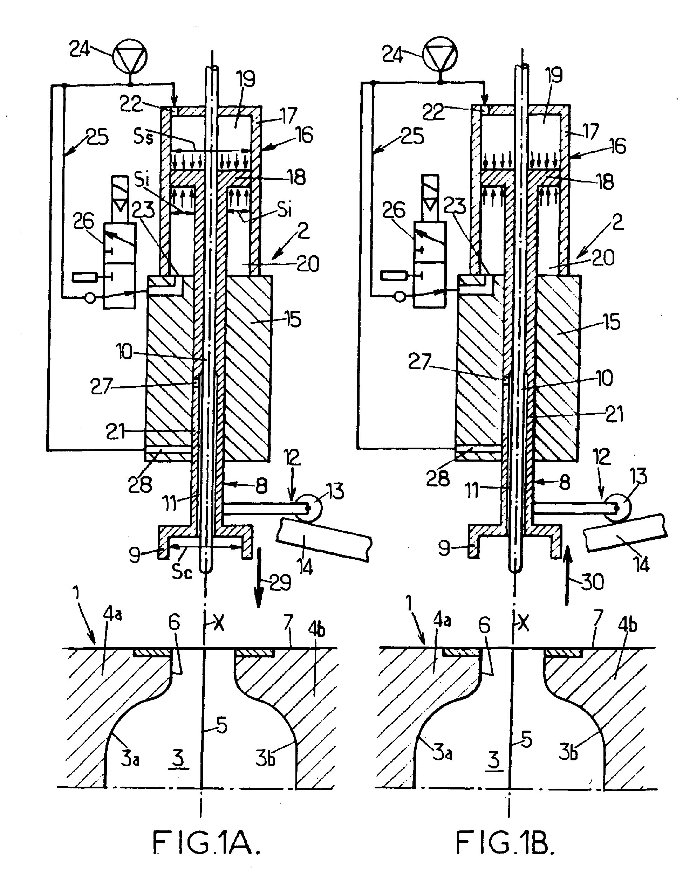

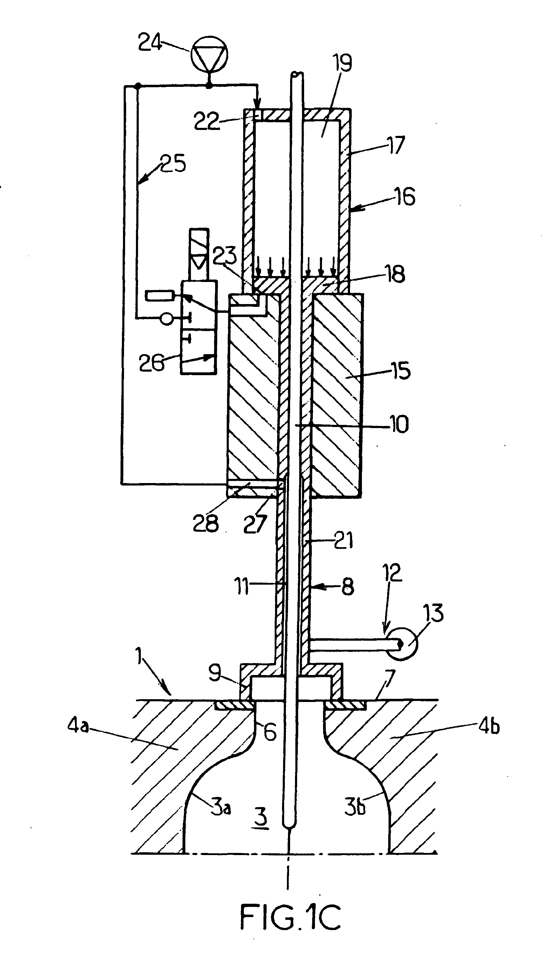

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- les figures 1A, 1B et 1C sont des vues schématiques illustrant un premier mode de réalisation de l'invention, montré dans trois positions fonctionnelles différentes respectivement ;
- la figure 2 est une vue schématique illustrant un second mode de réalisation de l'invention, montré dans une seule position fonctionnelle identique à celle de la figure 1A ; et
- la figure 3 est une vue schématique illustrant un troisième mode de réalisation, préféré, de l'invention, montré dans une seule position fonctionnelle identique à celle de la figure 1A.
   Dans la description qui suit, les termes « supérieur » et « inférieur » sont employés en référence à la position du dispositif illustré sur les dessins annexés afin de faciliter la compréhension, étant entendu qu'en position fonctionnelle du dispositif, les parties ou éléments concernés peuvent ne plus être « supérieurs » ou « inférieurs ».
   Aux figures 1A à 1C est illustré, de façon très schématique et de façon partielle, un dispositif de moulage de récipients en matière thermoplastique par soufflage ou étirage-soufflage de préformes chaudes visé par l'invention. Sur ces figures, seules sont montrées les parties du dispositif de moulage qui sont nécessaires à la compréhension de l'invention, les autres parties non concernées de façon directe par l'invention n'étant pas montrées et pouvant être de tout type et avoir toute configuration appropriée en regard des applications visées.
   En se reportant tout d'abord plus particulièrement à la figure 1A, un dispositif de moulage de récipients en matière thermoplastique, par soufflage ou étirage-soufflage de préformes chaudes, comporte un moule 1 et des moyens 2 de soufflage.
   Le moule 1, montré en coupe diamétrale, comporte une cavité 3 de moulage des récipients ayant un axe X. De façon pratique, comme c'est le cas pour la plupart des dispositifs de moulage fabriqués et commercialisés par la Demanderesse, le moule peut être du type dit moule portefeuille constitué de deux demi-moules 4a, 4b articulés en rotation l'un par rapport à l'autre autour d'un axe de rotation sensiblement parallèle à l'axe X de la cavité de moulage ; les demi-moules 4a, 4b comportent des empreintes 3a, 3b respectives qui, dans la position de fermeture du moule 1 montrée à la figure 1A avec les deux demi-moules accolés l'un contre l'autre le long d'un plan 5 de joint, définissent ensemble la cavité 3. La cavité 3 débouche par une ouverture 6 (passage du col de la préforme et du récipient) sur une face 7 du moule (typiquement la face supérieure du moule).
   Les moyens 2 de soufflage comprennent une tuyère 8 de soufflage du type tuyère-cloche qui est disposée au-dessus du moule 1 sensiblement coaxialement à l'axe X de la cavité 3 de moulage et qui est déplaçable axialement, sous l'action de moyens d'entraînement, dans un trou 27 prévu dans un corps 15 de tuyère disposé au-dessus du moule 1. Le déplacement axial de la tuyère 8 est effectué séquentiellement entre deux positions extrêmes, à savoir
- une position relevée dans laquelle l'extrémité en forme de cloche 9 de la tuyère 8 est élevée au-dessus du moule 1 de façon à dégager la face 7 du moule, pour autoriser le chargement des préformes dans le moule avant le soufflage et le déchargement des récipients moulés hors du moule après le soufflage, et
- une position abaissée ou position de soufflage (figure 1C) dans laquelle l'extrémité en forme de cloche 9 de la tuyère 8 est en appui étanche contre la face 7 du moule 1 pour permettre l'introduction dans les préformes de fluide de soufflage sous pression élevée (par exemple, typiquement de l'ordre de 40x10⁵ Pa).

La tuyère 8 se présente sous l'aspect général d'une tige 21 de tuyère de forme tubulaire qui se termine inférieurement par la susdite extrémité en forme de cloche 9. Pour l'alimentation de la tige de tuyère en fluide de soufflage, la paroi de la tige 21 de tuyère est percée d'un trou 27, tandis que le corps 15 de tuyère est percé, de préférence au voisinage de son extrémité inférieure, d'un canal 28 raccordé à une source de fluide de soufflage, de manière telle que le trou 27 soit mis en coïncidence avec le canal 28 et que la tige 21 de tuyère soit alimentée seulement quand la tuyère 8 est en position de soufflage et que le trou 27 ne soit plus en coïncidence avec le canal 28 et que l'alimentation de la tige 21 de tuyère en fluide de soufflage soit interrompue lorsque la tuyère 8 n'est pas dans la position de soufflage.

Comme cela se présente dans la plupart des dispositifs de moulage fabriqués et commercialisés par la Demanderesse, la tige 21 de tuyère est traversée par une tige 10 d'étirage qui est disposée coaxialement à l'axe X de la cavité et qui, elle aussi, est déplacée axialement de façon séquentielle par des moyens de déplacement (non montrés) pour étirer de façon axiale la préforme chaude afin d'aider mécaniquement le soufflage pneumatique. Dans cette configuration, l'air de soufflage est alimenté par un intervalle 11 annulaire subsistant entre la tige 10 d'étirage et la face interne de la tige 21 de tuyère dans la partie inférieure de celle-ci.

Les moyens d'entraînement de la tuyère 8 comprennent des moyens 12 d'entraînement mécaniques incluant au moins un galet 13 suiveur qui est solidaire de la tuyère 8 et au moins une came 14 de commande respective contre laquelle ledit galet 13 suiveur est maintenu en appui, le galet 13 suiveur et la came 14 étant en mouvement relatif. En pratique, dans une mise en oeuvre préférentielle d'un tel dispositif de moulage, ce mouvement relatif est obtenu par le fait que le dispositif de moulage appartient à une installation du type carrousel tournant comportant une pluralité de dispositifs de moulage identiques répartis périmétriquement sur le carrousel : ce sont alors les galets 13 suiveurs qui sont en déplacement et coopèrent avec une came 14 qui est solidaire du bâti du carrousel et qui est fixe.

Conformément à l'invention, les moyens d'entraînement comprennent en outre des moyens 16 d'entraînement pneumatiques qui incluent, d'une part, une enceinte 17 fixe entourant sensiblement coaxialement un tronçon terminal supérieur de la tige 21 de tuyère qui est opposé à l'extrémité en forme de cloche 9 et, d'autre part, un piston 18 enfermé dans ladite enceinte 17 et solidaire de l'extrémité supérieure de la tige 21 de tuyère ; ce piston 18 est, dans l'exemple illustré, percé centralement pour donner libre passage à la tige 10 d'étirage.

Le piston 18 définit dans l'enceinte 17 une chambre 19 supérieure et une chambre 20 inférieure de forme annulaire définie entre la paroi de l'enceinte 17 et la tige 21 de tuyère.

Le piston 18 possède
- une face supérieure ayant une surface désignée par Ss qui est supérieure à la surface - désignée par Sc - de la cloche 9 de la tuyère (dans les deux cas, les surfaces considérées sont les surfaces amputées de la surface de la section droite de la tige 10 d'étirage), et
- une face inférieure ayant une surface désignée par Si (surface intérieure de la chambre 20 inférieure amputée de la surface de la section droite de la tige 21 de tuyère) qui est inférieure à la surface précitée Ss de sa face supérieure.

Autrement dit, les faces supérieure et inférieure du piston 18 ont des surfaces Ss et Si différentes, la surface Ss de la face supérieure du piston étant plus grande que la surface Si de sa face inférieure.

Dans le mode de réalisation représenté à la figure 1A, le piston 18 est ajusté, éventuellement de façon étanche, à l'intérieur de l'enceinte 17, de sorte que le diamètre du piston 18 est sensiblement égal au diamètre intérieur de l'enceinte 17.

Un orifice 22 supérieur est prévu dans l'enceinte 17 et est en communication avec la chambre 19 supérieure, tandis qu'un orifice 23 inférieur est prévu dans l'enceinte 17 et est en communication avec la chambre 20 inférieure.

Les deux orifices 22, 23 supérieur et inférieur respectivement sont raccordés à une source 24 de fluide de commande sous pression. Un circuit 25 en dérivation, raccordé respectivement aux deux orifices 22, 23, est établi entre les deux chambres 19, 20 supérieure et inférieure. Dans l'exemple illustré, le circuit 25 en dérivation est montré extérieur à l'enceinte 17, mais un tel circuit en dérivation pourrait aussi être conçu intégré dans l'enceinte 17 et/ou le piston 18 comme cela sera exposé plus loin.

Il est en outre nécessaire que l'orifice 23 inférieur soit isolé et raccordé à l'atmosphère pendant la phase de soufflage ; alors, seul l'orifice 22 supérieur reste raccordé à la source 24 de fluide de commande. Une réalisation simple pour une telle mise en oeuvre consiste en ce que l'orifice 23 inférieur soit raccordé à la source 24 de fluide de commande, et donc à l'orifice 22 supérieur du fait de l'agencement retenu, par l'intermédiaire de moyens 26 sélecteurs pneumatiques avantageusement constitués par une électrovanne, par exemple une électrovanne 2 voies/2 positions comme représenté.

La surface Ss de la face supérieure du piston 18 est telle que l'effort exercé sur le piston par le fluide de commande dans la chambre 19 supérieure soit supérieur à l'effort exercé en sens inverse par le fluide de soufflage sur la cloche 9 de la tuyère 8.

Dans le mode de réalisation plus spécifiquement illustré aux figures 1A à 1C, la source 24 de fluide de commande est constituée, de façon simple, par la source de fluide de soufflage elle-même. Dans ces conditions, les deux orifices supérieur et inférieur sont raccordés à la source de fluide de soufflage, de façon directe pour l'orifice 22 supérieur et par l'intermédiaire de l'interrupteur pneumatique pour l'orifice 23 inférieur. La face supérieure du piston 18 possède une dimension transversale qui est supérieure à la dimension transversale de la cloche 9 de la tuyère 8.

Le fonctionnement du dispositif est le suivant.

Au cours de la phase de descente (flèche 29) de la tuyère 8 illustrée à la figure 1A, l'électrovanne 26 est disposée en position d'ouverture de sorte que la chambre 20 inférieure est en communication avec la source de fluide de soufflage et avec la chambre 19 supérieure. Du fait de l'écart entre les surfaces Ss et Si des faces supérieure et inférieure, respectivement, du piston 18, le piston 18 est repoussé vers le bas (sur la figure 1A), tandis que le fluide présent dans la chambre 20 inférieure est refoulé à travers l'orifice 23 inférieur et l'électrovanne 26 en direction de la source 24. Pendant ce temps, le galet 13 suiveur est maintenu en appui permanent contre la came 14 qui détermine à chaque instant le profil (vitesse instantanée et variation de vitesse) de vitesse de descente de la tuyère 8.

Au cours de la phase de remontée (flèche 30) de la tuyère 8 illustrée à la figure 1B, l'électrovanne 26 est toujours disposée en position d'ouverture de sorte que la chambre 20 inférieure reste en communication avec la source de fluide de soufflage et avec la chambre 19 supérieure. Sous l'action du galet 13 suiveur coopérant avec la came 14, la tuyère 8, solidaire du galet 13, est entraînée mécaniquement dans le sens de la montée. Au cours de ce déplacement, le fluide présent dans la chambre 19 supérieure est refoulé par l'orifice 22 supérieur tandis que du fluide est aspiré dans la chambre 20 inférieure à travers l'électrovanne 26 et l'orifice 23 inférieur.

Ainsi, lors des déplacements de la tuyère 8, le fluide de commande circule en circuit fermé et il n'y a aucune perte sensible de fluide.

Lorsque la tuyère est dans sa position de soufflage abaissée en appui contre la face 7 du moule 1 comme illustré à la figure 1C, le piston 18 est complètement descendu dans l'enceinte 17 de sorte que la chambre 20 inférieure présente un volume sensiblement nul tandis que la chambre 19 supérieure possède un volume maximum. La coopération entre le galet 13 suiveur et la came 14 est inactive. Dans cette position, l'électrovanne 26 est commutée en position de fermeture dans laquelle la liaison entre l'orifice 23 inférieur et la source 24 de fluide est interrompue et l'orifice 23 inférieur est raccordé à l'atmosphère comme illustré à la figure 1C. Dans cette configuration, aucun effort ne s'exerce sur la face inférieure du piston tandis que sa face supérieure est soumise à la pression du fluide de commande, en l'occurrence du fluide de soufflage. Le trou 27 étant alors aligné avec le canal 28, le fluide de soufflage est amené dans la tuyère et dans la préforme à souffler. La cloche 9, soumise à la pression du fluide de soufflage, subit un effort qui tend à la soulever de son appui contre le moule, lequel effort reste cependant inférieur à celui exercé sur la face supérieure du piston en raison de la différence entre les surfaces impliquées et en raison du fait qu'aucun fluide ne peut être admis dans la chambre 20 inférieure. Dans ces conditions, la tuyère 8 est verrouillée pneumatiquement dans sa position de soufflage en appui contre la face 7 du moule 1.

Grâce à l'agencement conforme à l'invention, ce sont les moyens 12 d'entraînement mécaniques avec le galet 13 suiveur en appui sur la came 14 qui déterminent la vitesse de déplacement de la tuyère, tandis que les moyens 16 d'entraînement pneumatiques assurent le maintien du galet 13 suiveur en appui sur la came durant le déplacement de descente de la tuyère 8 et le verrouillage de la tuyère 8 en appui sur le moule 1 durant la phase de soufflage.

Toujours dans la configuration proposée par l'invention, la longueur de la liaison entre l'orifice 23 inférieur et l'électrovanne 26 peut être rendue très courte, de sorte que le volume de fluide sous pression qui y est isolé lors de la commutation de l'électrovanne au moment du soufflage est rejeté à l'atmosphère et peut être rendu très minime. Conjointement avec le fait que le fluide de commande refoulé hors des chambres supérieure/inférieure lors des déplacements de la tuyère 8 n'est pas perdu, mais circule en circuit fermé, les moyens mis en jeu dans le cadre de l'invention procurent des économies substantielles en volume de fluide de commande, ce qui se traduit par des moyens compresseurs qui peuvent être moins puissants et donc moins coûteux à l'achat, et aussi par une moindre consommation électrique en fonctionnement. Ces avantages sont très remarquables dans la configuration du mode de réalisation plus spécialement envisagée ici où le fluide de commande n'est autre que le fluide de soufflage sous une pression élevée qui est coûteux à produire.

Dans les installations de fabrication de récipients en matière thermoplastique par soufflage ou étirage-soufflage de préformes chaudes, comportant une pluralité de dispositifs de moulage dont le nombre peut aller jusqu'à la quarantaine ou plus, le coût de production de fluides sous pression, et notamment du fluide de soufflage sous pression élevée, représente une fraction importante des coûts d'exploitation de ces installations. Pour tenter de réaliser des économies sur ce poste, il s'avère souhaitable de réduire dans toute la mesure du possible la consommation de fluide de soufflage.

A cette fin, une économie en fluide de soufflage sous pression élevée peut être obtenue, dans l'agencement conforme à l'invention qui a été exposé plus haut, en prévoyant, pour la commande pneumatique du déplacement de la tuyère 8, le recours à une source de fluide qui soit différente de la source de fluide de soufflage et qui soit de préférence une source de fluide sous une pression sensiblement moins élevée.

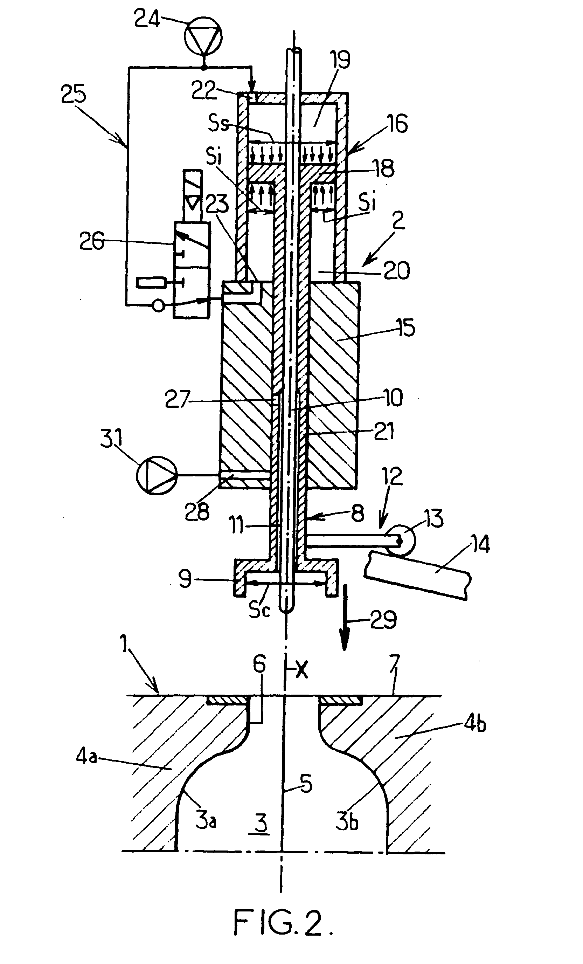

Ainsi, à titre de variante préférée au titre des économies d'exploitation du dispositif, dans le mode de réalisation illustré à la figure 2 (position fonctionnelle identique à celle de la figure 1A) la source 24 de fluide de commande est une source de fluide sous basse pression, avantageusement du fluide sous pression industrielle (typiquement de l'ordre de 7x10⁵ Pa) qui est présent dans toutes les installations pneumatiques pour assurer des commandes diverses, tandis que la source 31 de fluide de soufflage n'est raccordée qu'au seul canal 28. Il convient alors de faire en sorte que la surface de la face supérieure du piston soit déterminée, en corrélation avec la pression du fluide de commande, de manière que l'effort s'exerçant sur cette face soit supérieur à l'effort antagoniste exercé sur la cloche 9 de la tuyère 8 par le fluide de soufflage sous pression élevée lors du soufflage. Pour le reste, la structure et le fonctionnement du mode de réalisation de la figure 2 demeurent identiques à ce qui a été décrit plus haut en relation avec les figures 1A à 1C.

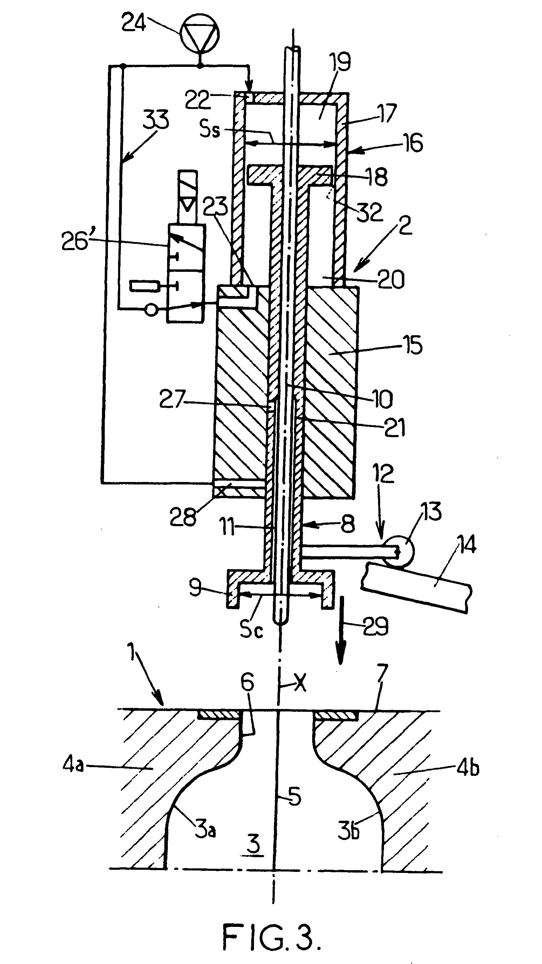

A la figure 3 est illustré schématiquement un autre mode de réalisation conforme à l'invention, qui est préféré en raison de la simplification et des réductions de coût qui en résultent. Cet agencement consiste en ce que le fluide échangé entre les deux chambres 19, 20 supérieure et inférieure circule à l'intérieur de l'enceinte 17. Dans l'agencement illustré à titre d'exemple à la figure 3, le piston 18 possède un diamètre moindre que le diamètre intérieur de l'enceinte 17, de sorte que, lors du déplacement du piston 18 à l'intérieur de l'enceinte 17, le fluide échangé entre les chambres 19, 20 supérieure et inférieure ne circule plus via le circuit 25 en dérivation (comme représenté sur les figures 1 et 2), mais via l'intervalle 32 annulaire existant entre la périphérie du piston 18 et la paroi de l'enceinte 17. On pourrait également envisager de mettre en oeuvre un piston qui aurait le même diamètre que le diamètre intérieur de l'enceinte, mais qui serait percé d'un ou plusieurs passages traversants faisant communiquer les deux chambres. Toutefois, un circuit 33 incluant des moyens 26' sélecteurs pneumatiques, typiquement sous forme d'une électrovanne, doit être maintenu en place entre la source 24 de fluide et le canal 23 de manière que, lors du soulèvement du piston à partir de sa position inférieure extrême, du fluide sous pression puisse être appliqué sur la face inférieure du piston 18 et éviter le phénomène d'aspiration qui, sinon, se produirait avec pour conséquence un effort d'entraînement trop important au contact du galet 13 suiveur et de la came 14 de commande. Dans ce cas toutefois, l'électrovanne 26', n'ayant à transmettre qu'un très faible débit, peut être petitement dimensionnée et donc être moins coûteuse. Pour mieux figurer l'absence de circulation, via le circuit 33, du fluide échangé entre les chambres 19, 20 supérieure et inférieure, l'orifice 22 de l'enceinte 17 et le circuit 33 sont représentés, à la figure 3, raccordés séparément à la source 14 de fluide sous pression.

## Revendications

1. Dispositif de moulage de récipients en matière thermoplastique par soufflage ou étirage-soufflage de préformes chaudes, ce dispositif comportant un moule (1) et des moyens (2) de soufflage comprenant une tuyère (8) de soufflage du type tuyère-cloche déplaçable axialement et des moyens d'entraînement pour déplacer ladite tuyère (8) de soufflage au-dessus dudit moule (1) entre une position relevée dans laquelle l'extrémité (9) de la tuyère (8) est élevée au-dessus du moule et une position de soufflage dans laquelle l'extrémité (9) de la tuyère (8) est en appui étanche contre le moule (1), lesquels moyens d'entraînement comprennent des moyens (12) d'entraînement mécaniques incluant au moins un galet (13) suiveur solidaire de la tuyère (8) et au moins une came (14) de commande respective contre laquelle ledit galet (13) suiveur est maintenu en appui, le galet (13) suiveur et la came (14) étant en mouvement relatif,
**caractérisé en ce que** les moyens d'entraînement comprennent en outre des moyens (16) d'entraînement pneumatiques qui incluent :
- une enceinte (17) fixe entourant sensiblement coaxialement un tronçon terminal supérieur de la tuyère (8) de soufflage,
- un piston (18) enfermé dans ladite enceinte (17) et solidaire de l'extrémité supérieure de la tuyère (8) de soufflage, ledit piston (18) définissant dans l'enceinte (17) une chambre (19) supérieure et une chambre (20) inférieure, le piston (18) ayant une face supérieure dont la surface est supérieure à la surface de la cloche (9) de la tuyère (8) et une face inférieure ayant une surface inférieure à la surface de sa face supérieure,
- un orifice (22) supérieur prévu dans l'enceinte (17) et en communication avec la chambre (19) supérieure,
- un orifice (23) inférieur prévu dans l'enceinte (17) et en communication avec la chambre (20) inférieure,
- les deux orifices (22, 23) supérieur et inférieur étant raccordés à une source (24) de fluide de commande sous pression,
- un circuit (25) en dérivation établi entre les deux chambres (19, 20) supérieure et inférieure, et
- des moyens (26, 26') sélecteurs propres à isoler et raccorder à l'atmosphère l'orifice (23) inférieur pendant la phase de soufflage,
- la surface de la face supérieure du piston (18) étant telle que l'effort exercé sur le piston (18) par le fluide de commande soit supérieur à l'effort en sens inverse exercé par le fluide de soufflage sur la cloche (9) de la tuyère (8),
ce grâce à quoi ce sont les moyens (12) d'entraînement mécaniques avec le galet (13) suiveur en appui sur la came (14) qui déterminent la vitesse de déplacement de la tuyère (8), tandis que les moyens (16) d'entraînement pneumatiques assurent le maintien du galet (13) suiveur en appui sur la came (14) durant le déplacement de la tuyère (8) et le verrouillage de la tuyère (8) en appui sur le moule (1) durant la phase de soufflage et
ce grâce à quoi aussi il devient possible de faire en sorte que le fluide sous pression commandant le fonctionnement des moyens (16) d'entraînement pneumatiques ne soit pas systématiquement rejeté à l'atmosphère et que les volumes morts puissent être réduits, rendant possibles des économies substantielles en fluide de soufflage sous pression.

2. Dispositif de moulage selon la revendication 1, **caractérisé en ce que** les deux orifices (22, 23) supérieur et inférieur sont raccordés à la source de fluide de soufflage et **en ce que** la face supérieure du piston (18) possède une dimension transversale qui est supérieure à la dimension transversale de la cloche (9) de la tuyère (8).

3. Dispositif de moulage selon la revendication 1, **caractérisé en ce que** les deux orifices (22, 23) supérieur et inférieur sont raccordés à une source (24) de fluide de commande à une pression inférieure à la pression du fluide de soufflage.

4. Dispositif de moulage selon la revendication 3, **caractérisé en ce que** la source (24) de fluide de commande est une source de fluide sous pression industrielle.

5. Dispositif de moulage selon l'une quelconque des revendications 1 à 4, **caractérisé en ce que** le circuit (25) en dérivation est extérieur à l'enceinte (17) et incorpore une électrovanne (26) qui est placée en position de fermeture pendant la phase de soufflage.

6. Dispositif de moulage selon l'une quelconque des revendications 1 à 4, **caractérisé en ce que** le circuit en dérivation est intérieur à l'enceinte (17), notamment s'étend entre l'enceinte (17) et le piston (18), et **en ce qu'**un circuit (33) incorporant une électrovanne (26') est interposé entre la source (24) de fluide de commande et l'orifice (23) inférieur.

7. Installation du type carrousel tournant pour la fabrication de récipients en matière thermoplastique par soufflage ou étirage-soufflage de préformes chaudes, comportant une pluralité de dispositifs de moulage répartis périmétriquement sur le carrousel, **caractérisée en ce que** chaque dispositif de moulage est agencé selon l'une quelconque des revendications 1 à 6.

## Patentansprüche

1. Vorrichtung zum Formen von Behältern aus thermoplastischem Material durch Blasen oder Streckblasen heißer Vorformen, wobei die Vorrichtung eine Form (1) und Blasmittel (2) aufweist, die eine axial bewegbare Düse (8) von der Art einer Glockendüse und Antriebsmittel zum Bewegen der Düse (8) über der Form (1) zwischen einer angehobenen Position, in der das Ende (9) der Düse (8) über die Form gehoben ist, und einer Blasposition, in der das Ende (9) der Düse (8) dicht an der Form (1) anliegt, umfassen, wobei die Antriebsmittel mechanische Antriebsmittel (12) umfassen, die zumindest einen fest mit der Düse (8) verbundenen Nockenfolger (13) und zumindest einen entsprechenden Steuernocken (14), an dem der Nockenfolger (13) anliegend gehalten wird, beinhalten, wobei der Nockenfolger (13) und der Nocken (14) in Relativbewegung stehen,
**dadurch gekennzeichnet, dass** die Antriebsmittel ferner pneumatische Antriebsmittel (16) umfassen, die Folgendes beinhalten:
- einen ortsfesten Raum (17), der einen oberen Endabschnitt der Düse (8) im Wesentlichen koaxial umgibt,
- einen in den Raum (17) eingeschlossenen und mit dem oberen Ende der Düse (8) fest verbundenen Kolben (18), wobei der Kolben (18) in dem Raum (17) eine obere Kammer (19) und eine untere Kammer (20) definiert, wobei der Kolben (18) eine Oberseite, deren Oberfläche über der Oberfläche der Glocke (9) der Düse (8) liegt, und eine Unterseite mit einer Oberfläche, die unter der Oberfläche seiner Oberseite liegt, aufweist,
- eine obere Öffnung (22), die im Raum (17) vorgesehen ist und mit der oberen Kammer (19) in Kommunikation steht,
- eine untere Öffnung (23), die im Raum (17) vorgesehen ist und mit der unteren Kammer (20) in Kommunikation steht,
- wobei die obere und die untere Öffnung (22, 23) mit einer unter Druck stehenden Steuermediumquelle (24) verbunden sind,
- einen zwischen der oberen und der unteren Kammer (19, 20) angeordneten Abzweigungskreis (25) und Auswahlmittel (26, 26'), die geeignet sind, die untere Öffnung (23) während der Blasphase zu isolieren und mit der Atmosphäre zu verbinden,
- wobei die Oberfläche der Oberseite des Kolbens (18) dergestalt ist, dass die durch das Steuermedium auf den Kolben (18) ausgeübte Kraft größer als die durch das Blasmedium in Gegenrichtung auf die Glocke (9) der Düse (8) ausgeübte Kraft ist,
wodurch es die mechanischen Antriebsmittel (12) mit dem am Nocken (14) anliegenden Nockenfolger (13) sind, welche die Bewegungsgeschwindigkeit der Düse (8) bestimmen, während die pneumatischen Antriebsmittel (16) gewährleisten, dass der Nockenfolger (13) während der Bewegung der Düse (8) am Nocken (14) anliegend gehalten wird und die Düse (8) während der Blasphase an der Form (1) anliegend gesichert ist, und
wodurch zudem ermöglicht wird, dass das unter Druck stehende Medium, das den Betrieb der pneumatischen Antriebmittel (16) steuert, nicht systematisch in die Atmosphäre ausgestoßen wird und dass sich die Totvolumina reduzieren lassen, wodurch wesentliche Einsparungen bei dem unter Druck stehenden Blasmedium ermöglicht werden.

2. Formvorrichtung nach Anspruch 1, **dadurch gekennzeichnet, dass** die obere und die untere Öffnung (22, 23) mit der Blasmediumquelle verbunden sind und dass die Oberseite des Kolbens (18) eine Querausdehnung besitzt, die über der Querausdehnung der Glocke (9) der Düse (8) liegt.

3. Formvorrichtung nach Anspruch 1, **dadurch gekennzeichnet, dass** die obere und die untere Öffnung (22, 23) mit einer Steuermediumquelle (24) verbunden sind, deren Druck geringer als der Druck des Blasmediums ist.

4. Formvorrichtung nach Anspruch 3, **dadurch gekennzeichnet, dass** die Steuermediumquelle (24) eine industrielle unter Druck stehende Mediumquelle ist.

5. Formvorrichtung nach einem der Ansprüche 1 bis 4, **dadurch gekennzeichnet, dass** der Abzweigungskreis (25) sich außerhalb des Raums (17) befindet und ein Magnetventil (26) einschließt, das während der Blasphase in geschlossener Position angeordnet ist.

6. Formvorrichtung nach einem der Ansprüche 1 bis 4, **dadurch gekennzeichnet, dass** sich der Abzweigungskreis innerhalb des Raums (17) befindet und insbesondere zwischen dem Raum (17) und dem Kolben (18) erstreckt und dass zwischen der Steuermediumquelle (24) und der unteren Öffnung (23) ein Kreis (33) angeordnet ist, der ein Magnetventil (26') einschließt.

7. Anlage von der Art eines sich drehenden Karussells zur Fertigung von Behältern aus thermoplastischem Material durch Blasen oder Streckblasen heißer Vorformen, die eine Vielzahl von über den Umfang des Karussells verteilten Formvorrichtungen aufweist, **dadurch gekennzeichnet, dass** jede Formvorrichtung nach einem der Ansprüche 1 bis 6 ausgebildet ist.

## Claims

1. Device for moulding thermoplastic containers by blow-moulding or stretch blow-moulding hot preforms, said device comprising a mould (1) and blowing means (2) comprising a blowing nozzle (8) of the bell-nozzle type which is axially displaceable and driving means for displacing said blowing nozzle (8) above said mould (1) between a raised position in which the end (9) of the nozzle (8) is raised above the mould and a blowing position in which the end (9) of the nozzle (8) is in sealing abutment against the mould (1), which driving means comprise mechanical driving means (12) including at least one cam follower roller (13) integral with the nozzle (8), and at least one respective control cam (14) against which said cam follower roller (13) is maintained in abutment, the cam follower roller (13) and the cam (14) being in relative movement, **characterized in that** the driving means further comprise pneumatic driving means (16) which include:
- a fixed enclosure (17) surrounding substantially coaxially an upper terminal section of the blowing nozzle (8),
- a piston (18) enclosed in said enclosure (17) and integral with the upper end of the blowing nozzle (8), said piston (18) defining in the enclosure (17) an upper chamber (19) and a lower chamber (20), the piston (18) having an upper face of which the surface area is greater than the surface area of the bell (9) of the nozzle (8) and a lower face having a surface area which is less than the surface area of its upper face,
- an upper orifice (22) provided in the enclosure (17) and in communication with the upper chamber (19),
- a lower orifice (23) provided in the enclosure (17) and in communication with said lower chamber (20),
- said two upper and lower orifices (22, 23) being connected to a source (24) of pressurized control fluid,
- a bypass circuit (25) extending between said two upper and lower chambers (19, 20), and
- selector means (26, 26') capable of separating said lower orifice (23) from, and connecting said lower orifice (23) to, the atmosphere during the blow-moulding phase,
- the surface area of the upper face of the piston (18) being such that the force exerted on the piston (18) by the control fluid is greater than the force in the reverse direction exerted by the blowing fluid on the bell (9) of the nozzle (8),
whereby it is the mechanical driving means (12) with the cam follower roller (13) in abutment against the cam (14) which determine the speed of displacement of the nozzle (8), whilst the pneumatic driving means (16) ensure the maintenance of the cam follower roller (13) in abutment against the cam (14) during the displacement of the nozzle (8) and the locking of the nozzle (8) in abutment against the mould (1) during the blow-moulding phase, and
whereby it also becomes possible that the pressurized fluid controlling the operation of the pneumatic driving means (16) is not systematically discharged into the atmosphere and that the dead volumes may be reduced, making possible substantial savings in pressurized blowing fluid.

2. Moulding device according to Claim 1, **characterized in that** said two upper and lower orifices (22, 23) are connected to the source of blowing fluid and **in that** said upper face of the piston (18) has a transverse dimension which is greater than the transverse dimension of the bell (9) of the nozzle (8).

3. Moulding device according to Claim 1, **characterized in that** said two upper and lower orifices (22, 23) are connected to a source (24) of control fluid at a pressure which is lower than the pressure of the blowing fluid.

4. Moulding device according to Claim 3, **characterized in that** said source (24) of control fluid is a source of fluid at industrial pressure.

5. Moulding device according to any one of Claims 1 to 4, **characterized in that** said bypass circuit (25) is outside the enclosure (17) and incorporates a solenoid valve (26) which is placed in the closed position during the blow-moulding phase.

6. Moulding device according to any one of Claims 1 to 4, **characterized in that** said bypass circuit is inside the enclosure (17), and in particular extends between the enclosure (17) and the piston (18), and **in that** a circuit (33) incorporating a solenoid valve (26') extends between the source (24) of control fluid and the lower orifice (23).

7. Installation of the rotating carousel type for the manufacture of thermoplastic containers by blow-moulding or stretch blow-moulding hot preforms, comprising a plurality of moulding devices distributed on the periphery of the carousel, **characterized in that** each moulding device is designed according to any one of Claims 1 to 6.
